# EUROPEAN PATENT APPLICATION

(11) **EP 1 868 207 A2**
(43) Date of publication of application: **19.12.2007**
(21) Application number: 07110291.7
(22) Date of filing: 14.06.2007
(51) Int. Cl.: G11B 33/14

(54) **Disk dampener, hard disk drive comprising the disk dampener, and related method**

(30) Priority: 15.06.2006 KR 20060053898
(71) Applicant: Samsung Electronics Co., Ltd., Suwon-si, Gyeonggi-Do (KR)
(72) Inventor: Kim, Youn-tai, Giheung-gu, Yongin-si Gyeonggi-do (KR)
(74) Representative: Grünecker, Kinkeldey, Stockmair & Schwanhäusser Anwaltssozietät

(57) **Abstract**

A disk dampener, a hard disk drive (HDD) including the disk dampener, and a method for fabricating the HDD are provided. The disk dampener is disposed adjacent to a surface of a disk in a hard disk drive (HDD), wherein an air gap is disposed between the disk dampener and the surface of the disk. The disk dampener includes an edge portion having a shape corresponding to an outer edge of the disk, and an extending portion extending from the edge portion toward an axis passing through the center of the disk. In addition, the axis is perpendicular to the surface of the disk, at least a portion of the air gap is disposed between the extending portion and the disk, and the edge portion and the extending portion are formed from different materials.

## Description

### BACKGROUND OF THE INVENTION

### 1. Field of the Invention

Embodiments of the invention relate to a disk dampener, a hard disk drive (HDD) comprising the disk dampener, and a method for fabricating the HDD. In particular, embodiments of the invention relate to a disk dampener having an edge portion and an extending portion, wherein the edge portion and the extending portion are formed from different materials, a HDD comprising the disk dampener, and a method for fabricating the HDD.

This application claims priority to Korean Patent Application No. 10-2006-0053898, filed on June 15, 2006, the subject matter of which is hereby incorporated by reference in its entirety.

### 2. Description of the Related Art

A hard disk drive (HDD) is a device used for storing data in a computer. More specifically, a HDD includes at least one disk on which data may be stored, and data can be written to and read from a disk in the HDD using a read/write head. In addition, an actuator moves the read/write head to desired positions on the disk so that the read/write head can read data from and write data to the disk. The actuator also holds the read/write head at a position that is a predetermined distance away from a data-storage portion of a surface of the disk.

A HDD includes a spindle motor, one or more data storage disks mounted on the spindle motor, and an actuator that moves a read/write head, which reads data from and writes data to predetermined positions on a corresponding disk.

The data storage disks rotate, and the rotating disks may vibrate (i.e., flutter) due to at least one of structural defects in the spindle motor, misalignment (i.e., deflection errors) of the disks generated during an assembly process, and turbulent air flow inside the HDD. As the storage capacity and the track per inch (TPI) density of HDDs improve, it is necessary to control a servo actuator with relatively high precision so that the servo actuator can accurately trace the tracks on a data-storage surface of a disk. However, considerable windage is generated around the outer edge (i.e., circumference) of a rotating disk, and that windage negatively affects the precision with which the servo actuator can be controlled. That is, as values of a position error signal (PES) and track mis-registration (TMR) of the HDD increase because of the vibration caused by the windage, data read operations and data write operations of the read/write head are negatively affected.

To solve these problems caused by windage, a thin, plate-shaped disk dampener was installed substantially between adjacent disks in a HDD. The disk dampener reduces an aerodynamic pressure exerted (i.e., generated) on the outer edge of the disk.

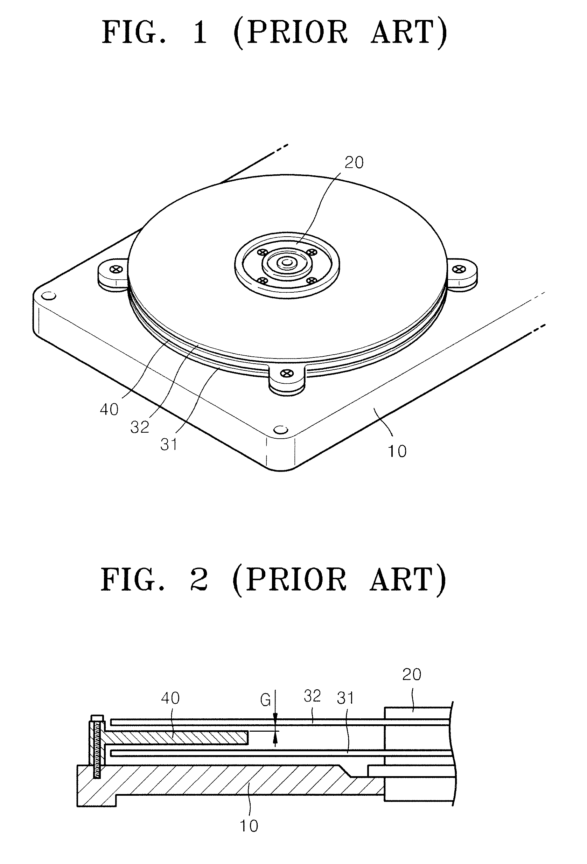

Figure (FIG.) 1 is a perspective view of a conventional disk dampener disposed substantially between disks. FIG. 2 is a cross-sectional view of the disks and the disk dampener shown in FIG. 1.

Referring to FIGS. 1 and 2, a plurality of disks 31 and 32 are mounted on a spindle motor 20 disposed on a base member 10 of a HDD. A disk dampener 40 is disposed substantially between the disks 31 and 32. When disk dampener 40 is disposed substantially between disks 31 and 32, the distance between disk dampener 40 and disk 32 (i.e., an air gap G) is relatively small and the distance between disk dampener 40 and disk 31 is also relatively small. Thus, vibrations of disks 31 and 32 are reduced by a dampening effect produced by the air compressed between disk dampener 40 and disks 31 and 32, respectively.

Increasing the thickness of disk dampener 40 to reduce the size of air gap G and increasing the length of disk dampener 40 to extend further towards an axis passing through the center of a disk and perpendicular to the surface of the disk each increase the air dampening effect corresponding to disk dampener 40. Disk dampener 40 is supported like a cantilever. That is, viewing a cross-section of a portion of disk dampener 40, such as the cross-section shown in FIG. 2, disk dampener 40 includes a first portion, which may be referred to as a fixing portion, which is disposed at a first end of disk dampener 40 and is disposed near the outer edges of disks 31 and 32. In addition, disk dampener 40 also includes a second portion, which may be referred to as a free-floating portion, which extends from the fixing portion towards spindle motor 20 (which passes through the respective centers of disks 31 and 32) and also comprises a second end disposed nearer to spindle motor 20 than the fixing portion.

The longer the free-floating portion of disk dampener 40, the more the free-floating portion will bend. Thus, the longer the free-floating portion of disk dampener 40, the more likely it is that, when the HDD comprising disk dampener 40 suffers an external impact, a data-storage region of a surface of a disk of the HDD will be damaged by contact between the disk and disk dampener 40. When disk dampener 40 is formed from a relatively rigid (i.e., hard) metal(s), the fixing portion is more readily fixed to base member 10 and the free-floating portion will bend less than when a relatively flexible (i.e., softer) material(s) is used. However, it is more expensive to fabricate disk dampener 40 having the desired shape when using a relatively rigid metal. In addition, when a disk dampener 40 formed from a relatively rigid metal comes into contact with a data-storage region of a surface of a disk, disk dampener 40 is more likely to scratch the data-storage region of the disk than when it is formed from a relatively flexible material.

If disk dampener 40 is formed from relatively flexible materials, disk dampener 40 is less likely to scratch a data-storage region of a disk when disk dampener 40 comes into contact with the disk. In addition, it is less expensive to fabricate a disk dampener 40 from a relatively flexible material. However, when disk dampener 40 is formed from a relatively flexible material, the thickness and the length of disk dampener 40 cannot be as large as when disk dampener 40 is formed from a relatively rigid material, so disk dampener 40 may produce a lesser air dampening effect when disk dampener 40 is formed from a relatively flexible material.

Recently, many disks have been mounted in a single HDD in order to increase the storage capacity of the HDD. Increasing the number of disks in a HDD increases the influence of windage on the disks, so the air-damping effect produced in the HHD should also be increased.

### SUMMARY OF THE INVENTION

Embodiments of the invention provide a disk dampener that may be readily attached to a hard disk drive (HDD), is relatively stable when the HDD in which it is disposed suffers an external impact, and facilitates a relatively great air dampening effect; a HDD comprising the disk dampener, and a method for fabricating the HDD. The disk dampener may also be readily assembled and fabricated relatively inexpensively.

In one embodiment, the invention provides a disk dampener disposed adjacent to a surface of a disk in a hard disk drive (HDD), wherein an air gap is disposed between the disk dampener and the surface of the disk. The disk dampener comprises an edge portion having a shape corresponding to an outer edge of the disk, wherein the disk dampener is anchored to the HDD through the edge portion, and an extending portion extending from the edge portion toward an axis passing through the center of the disk. The axis is perpendicular to the surface of the disk, at least a portion of the air gap is disposed between the extending portion and the disk, and the edge portion and the extending portion are formed from different materials.

In another embodiment, the invention provides a hard disk drive (HDD) comprising a spindle motor disposed on a frame, a data-storage disk mounted on the spindle motor, an actuator moving a head adapted to read and write data, and a disk dampener disposed adjacent to a surface of the disk. In addition, an air gap is disposed between the disk dampener and the surface of the disk. Also, the disk dampener comprises an edge portion having a shape corresponding to the outer edge of the disk, wherein the disk dampener is anchored to the HDD through the edge portion; and an extending portion extending from the edge portion toward an axis passing through the center of the disk. In addition, the axis is perpendicular to the surface of the disk, at least a portion of the air gap is disposed between the extending portion and the disk, and the edge portion and the extending portion are formed from different materials.

In yet another embodiment, the invention provides a method for fabricating a hard disk drive (HDD). The method comprises forming a disk dampener, wherein forming the disk dampener comprises forming an extending portion, and forming an edge portion having a shape corresponding to an outer edge of a disk of the HDD, wherein the extending portion and the edge portion are formed from different materials. The method further comprises attaching the disk dampener to a frame, and placing the disk on a spindle motor attached to the frame. In addition, an air gap is disposed between the disk dampener and the disk, at least a portion of the air gap is disposed between the extending portion and the disk, and the extending portion extends from the edge portion towards the spindle motor.

### BRIEF DESCRIPTION OF THE DRAWINGS

Embodiments of the invention will be described herein with reference to the accompanying drawings, in which:

FIG. 1 is a perspective view of a conventional disk dampener disposed between disks in a hard disk drive (HDD);

FIG. 2 is a partial cross-sectional view of the disks and the disk dampener shown in FIG. 1;

FIG. 3 is an exploded perspective view of a HDD in accordance with an embodiment of the invention;

FIG. 4 is an exploded perspective view of a disk dampener in accordance with an embodiment of the invention;

FIG. 5 is an assembled perspective view of a disk dampener in accordance with an embodiment of the invention;

FIG. 6 is a partial cross-sectional view of a HDD comprising a disk dampener in accordance with an embodiment of the invention; and,

FIG. 7 is a graph illustrating a vibration-reducing effect of a disk dampener in accordance with an embodiment of the invention.

### DESCRIPTION OF EMBODIMENTS

Embodiments of the invention will be described below with reference to the accompanying drawings.

Embodiments of the invention recognize the following design concepts. First, the air dampening effect in a hard disk drive (HDD) comprising multiple disks may be increased by increasing the number of disk dampeners in the HDD, as well as by increasing the length and thickness of each of the disk dampeners. Second, when multiple disk dampeners are provided, each disk dampener comprises spacers so that appropriate spacing (i.e., intervals) may be maintained between the multiple disk dampeners. Third, the spacers of a disk dampener should be integrally formed with an edge portion of the disk dampener so that the disk dampener may be more readily fabricated.

As used herein, when a first element is said to be "on" a second element, the first element may be directly on the second element or intervening elements may be present.

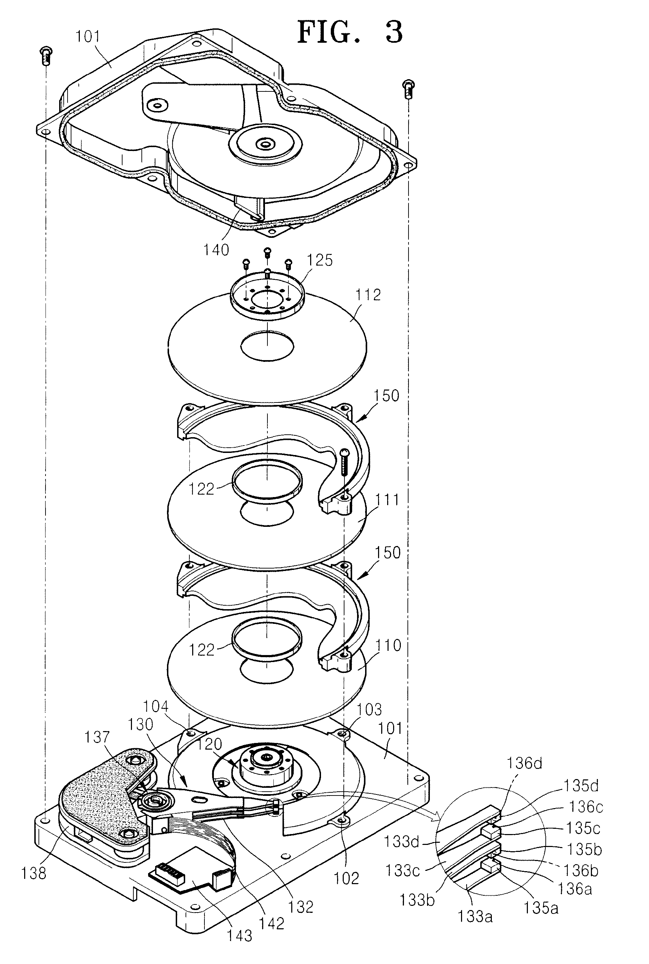

FIG. 3 is an exploded perspective view of a HDD in accordance with an embodiment of the invention. In the embodiment illustrated in FIG. 3, the HDD comprises a frame 101 and a plurality of disks comprising disks 110, 111, and 112. The HDD of FIG. 3 further comprises a spindle motor 120, a head stack assembly (HSA) 130, a voice coil motor 138, and disk dampeners 150.

A first portion of frame 101, which is illustrated at the bottom of FIG. 3, supports spindle motor 120 and HSA 130 and is formed from stainless steel or aluminum. Disks 110, 111, and 112 are rotatably disposed on spindle motor 120.

Spindle motor 120 is attached to frame 101 and rotates disks 110, 111, and 112. Ring-type disk spacers 122 are disposed between pairs of adjacent disks of disks 110, 111, and 112 and provide an interval of separation between the disks of each pair of adjacent disks. In addition, a disk clamp 125 is connected to the top of spindle motor 120 and prevents disks 110, 111, and 112 from separating further than their respective intervals of separation.

HSA 130 writes data to disks 110, 111, and 112 or reads data stored on disks 110, 111, and 112. In addition, HSA is rotatably disposed on the first portion of frame 101. HSA 130 comprises a swing arm 132 disposed rotatably around a pivot bearing 137; first, second, third, and fourth suspensions 133a, 133b, 133c, and 133d each connected to a front tip of a swing arm 132; and first, second, third, and fourth sliders 135a, 135b, 135c, and 135d which are supported by suspensions 133a, 133b, 133c, and 133d, respectively. In addition, the first, second, third, and fourth sliders 135a, 135b, 135c, and 135d face surfaces of disks among rotating disks 110, 111 and 112. Also, first, second, third, and fourth magnetic heads 136a, 136b, 136c, and 136d for reading and writing data are formed on the first, second, third, and fourth sliders 135a, 135b, 135c and 135d, respectively.

A voice coil motor 138 provides torque for driving HSA 130 and is controlled by a servo control system. HSA 130 rotates in accordance with an interaction between current input to a VCM coil (not shown) of voice coil motor 138, which is mounted at a rear tip of HSA 130, and a magnetic field generated by a magnet (not shown). In addition, the direction in which HSA 130 rotates is dictated by Fleming's left hand rule.

First, second, third, and fourth sliders 135a, 135b, 135c, and 135d disposed on the front tips of suspensions 133a, 133b, 133c, and 133d, respectively, move towards and away from spindle motor 120 while moving substantially radially with respect to disks 110, 111, and 112.

A circulation filter 140 that filters out foreign substances in air that flows into the HDD is disposed near the respective outer edges of disks 110, 111, and 112. In addition, a flexible printed circuit (FPC) bracket 143 is disposed on the first portion of frame 101, disposed at one corner of the first portion of frame 101, and is also disposed near HSA 130. FPC bracket 143 connects a FPC 142 to a main printed circuit board disposed under the first portion of frame 101 (i.e., disposed on a side of the first portion of frame 101 opposite the side on which FPC bracket 143 is disposed). In addition, FPC 142 is connected to HSA 130.

Disk dampeners 150 may reduce disk vibrations and noise that can occur when disks 110, 111, and 112 rotate. In addition, disk dampeners 150 may reduce the amount that storage regions of corresponding surfaces of disks 110, 111, and 112 are scratched when the HDD suffers an external impact. As used herein, a "storage region" of a disk is a portion of a surface of a disk where data may be stored, and a "non-storage region" of the disk is a portion of a surface of a disk where data may not be stored. Each of disk dampeners 150 is interposed between two disks of disks 110, 111, and 112. For each disk dampener 150, disk dampener 150 is separated from each of its corresponding two disks by a predetermined interval forming an air gap G between disk dampener 150 and the first disk of the two disks and between disk dampener 150 and the second disk of the two disks. Thus, disk dampeners 150 do not normally make contact with disks 110, 111, and 112. Disk dampeners 150 are attached to first, second, and third supports 102, 103, and 104 disposed on the first portion of frame 101. Disk dampeners 150 are arranged so that they do not make contact with HSA 130 so that disk dampeners 150 do not disturb the movement of HSA 130. In addition, each disk dampener 150 has an outer edge that is substantially shaped like an arc and a concave inner edge.

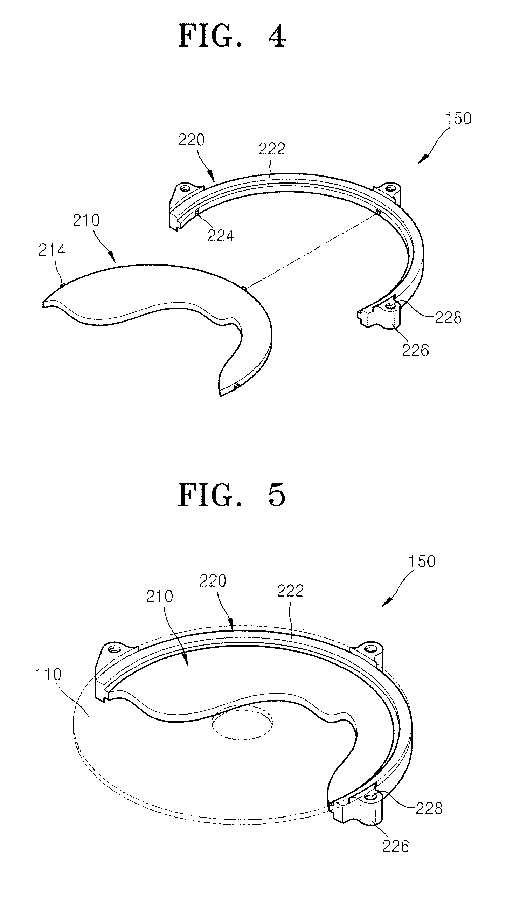

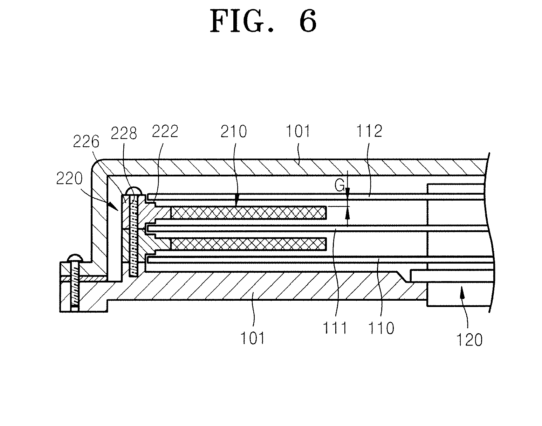

FIG. 4 is an exploded perspective view of disk dampener 150 in accordance with an embodiment of the invention. FIG. 5 is an assembled perspective view of disk dampener 150 in accordance with an embodiment of the invention. FIG. 6 is a partial cross-sectional view of a hard disk drive comprising disk dampener 150 in accordance with an embodiment of the invention. Referring to FIGS. 4 through 6, the structure and function of disk dampener 150 will now be described.

Disk dampener 150 comprises an edge portion 220 and an extending portion 210. Edge portion 220 has a shape that corresponds to the shape and size of the outer edge (i.e., the circumference) of each of disks 110, 111, and 112. Edge portion 220 comprises a plurality of spacers 226 and anchoring holes 228, wherein disk dampener 150 is anchored to the first portion of frame 101 through the anchoring holes. Extending portion 210 extends from edge portion 220 towards spindle motor 120 (i.e., towards an axis passing through the center of at least one of disks 110, 111, and 112, wherein the axis is also perpendicular to a surface of the at least one disk). In addition, extending portion 210 forms at least a portion of an air gap G between itself and a disk disposed on a first side of extending portion 210 and at least a portion of another air gap G between itself and a disk disposed on a second side of extending portion 210. When extending portion 210 is disposed relatively near an adjacent disk, the air in air gap G formed at least in part between extending portion 210 and the adjacent disk advantageously produces an air dampening effect (i.e., an air dampening force). As used herein, an "air dampening effect" is a dampening effect produced by air disposed (i.e., compressed) in an air gap G between a disk dampener 150 and a corresponding disk, wherein the dampening effect dampens (i.e., reduces) the vibration of the corresponding disk when the disk rotates.

In addition, each of spacers 226 is longer than all non-spacer portions of edge portion 220 along a first dimension parallel to the axis, wherein extending portion 210 extends away from edge portion 220 along a second dimension perpendicular to the first dimension. As used herein, the term "parallel" means substantially parallel, and the term "perpendicular" means substantially perpendicular. Thus, when multiple disk dampeners 150 are stacked on top of one another along the first dimension, spacers 226 separate like portions of adjacent disk dampeners 150 (other than spacers 226). As shown in FIGS. 4-6, anchoring holes 228 are disposed in spacers 226, respectively. Also, as used herein, "all non-spacer portions" of edge portion 220 means all portions of edge portion 220 excluding all spacers 226.

Referring to FIGS. 5 and 6, one side of extending portion 210, which may be referred to herein as a "supported side", is supported by edge portion 220, and an opposite side of extending portion 210, which may be referred to herein as a "free-floating side", is not supported. In addition, the free-floating side of extending portion 210 is disposed nearer to spindle motor 120 than the supported side (i.e., nearer to the axis passing through the center of at least one of disks 110, 111, and 112 than the supported side). The length of extending portion 210 (along the second dimension) and the thickness of extending portion 210 (along the first dimension) may be increased in order to maintain the air damping force. In addition, disk dampener 150 may be at least partially formed from at least one material rigid enough to reduce an amount of damage caused to a data-storage region of a disk by the free-floating side of extending portion 210 as a result of extending portion 210 bending when the HDD suffers an external impact.

Edge portion 220 and extending portion 210 are formed from different materials. Extending portion 210 should be relatively rigid so that extending portion 210 can be relatively long and relatively thick while also being relatively unsusceptible to bending when the HDD suffers an external impact. Viewing a cross-section of extending portion 210 taken along a line that extends between spindle motor 120 and edge portion 220, the cross-section of extending portion 210 has a relatively simple, rectangular shape. Extending portion 210 may be formed from materials such as aluminum, an alloy thereof, or the like.

In addition, forming edge portion 220 from plastic through injection molding rather than forming the entire disk dampener 150 from one or more metals contributes to decreasing fabrication costs and may increase process yield.

Disk dampener 150 may be fabricated using either of the following methods. Extending portion 210 and edge portion 220 may be molded together using injection molding. Alternatively, extending portion 210 and edge portion 220 may be fabricated separately and disk dampener 150 may then be formed by mechanically connecting extending portion 210 and edge portion 220 using a connection system.

In accordance with an embodiment of the invention, when disk dampener 150 is fabricated by molding together extending portion 210 and edge portion 220 by injection molding plastic, extending portion 210 is inserted into a mold of edge portion 220. That is, extending portion 210 and edge portion 220 may be molded together through insert injection molding.

When extending portion 210 and edge portion 220 are assembled using a connection system, the connection system may be a bolt, an adhesive, or the like. In addition, the connection system may comprise projections 214 disposed on extending portion 210 and cavities 224 formed in edge portion 220, wherein projections 214 are adapted for insertion (i.e., may be inserted) into cavities 224, respectively.

For each of disks 110, 111, and 112, a portion of a surface of the disk disposed near an outer edge of the disk is a non-storage region (i.e., is not part of the storage region of the surface of the disk). When the HDD in which disks 110, 111, and 112 are disposed suffers an external impact, the external impact will likely cause the outer edges of disks 110, 111, and 112 to bend. Thus, as shown in FIGS. 4-6, edge portion 220 comprises an impact-absorbing portion 222, which may be formed from a viscoelastic material and may be disposed adjacent to the edge of one of disks 110, 111, and 112 in the HDD. As shown in FIGS. 4-6, impact-absorbing portion 222 is thicker than extending portion 210 along the first dimension.

When the HDD operates normally, impact-absorbing portion 222 forms a portion of an air gap G with an adjacent disk. When disks 110, 111, and 112 bend as a result of the HDD suffering an external impact, non-storage regions (i.e., the edges) of disks 110, 111, and 112 make contact with impact-absorbing portions 222 before storage regions of disks 110, 111, and 112 make contact with disk dampeners 150. Thus, disk dampeners 150 may reduce an amount that storage regions of disks 110, 111, and 112 are damaged. Since edge portion 220 is formed from plastic, edge portion 220 having a relatively complex shape may be readily formed. In addition, since edge portion 220 is formed from a viscoelastic material, edge portion 220 absorbs impact with a disk relatively well. Additionally, since impact-absorbing portion 222 may be formed as a part of edge portion 220, edge portion 220 may also be formed from a viscoelastic material, so edge portion 220 may also absorb an impact with a disk relatively well. Also, as shown in FIGS. 4-6, impact-absorbing portion 222 is thicker than extending portion 210 along the first dimension.

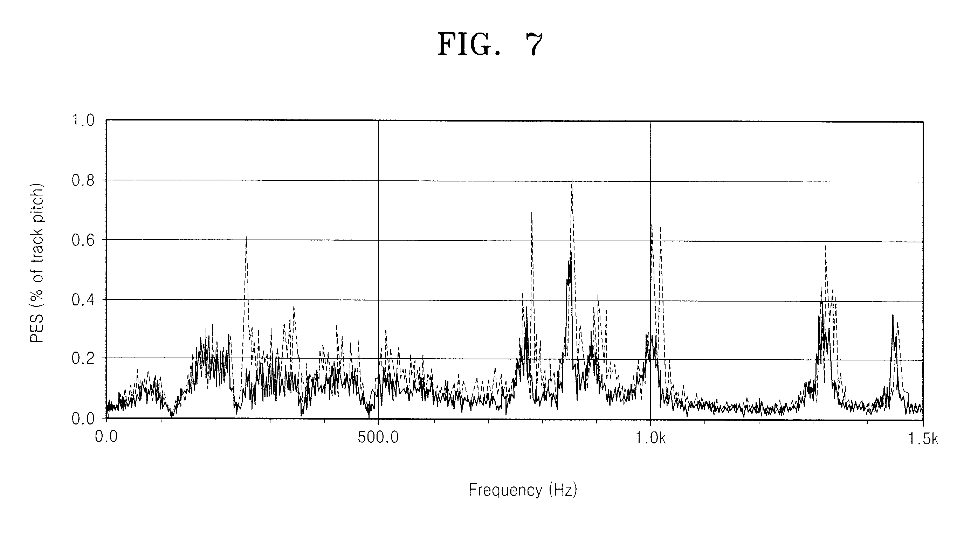

FIG. 7 is a graph illustrating a vibration-reducing effect of a disk dampener in accordance with an embodiment of the invention. In the graph of FIG. 7, the horizontal axis represents frequency in Hz and the vertical axis represents a position error signal (PES) expressed in percentage of the track pitch, wherein the PES is proportional to the quantity of vibration. The dotted line illustrates the PESs of a HDD not comprising a disk dampener and the solid line illustrates the PESs of a HDD comprising a disk dampener in accordance with an embodiment of the invention. The graph of FIG. 7 shows that, when a HDD comprises a disk dampener 150 (which is a disk dampener in accordance with an embodiment of the invention), the peak value of the PES is reduced by a substantial amount relative to the peak value of the PES for a HDD that does not comprise a disk dampener.

Referring to FIGS. 3-6, a method for fabricating a HDD in accordance with an embodiment of the invention will now be described. The method comprises forming a disk dampener 150, wherein forming disk dampener 150 comprises forming an extending portion 210 and forming an edge portion 220 having a shape corresponding to an outer edge of a disk 111 of the HDD. Extending portion 210 and edge portion 220 are formed from different materials. The method further comprises attaching disk dampener 150 to a first portion of frame 101 (the first portion of frame 101 is shown at the bottom of FIG. 3). In addition, the method further comprises placing disk 111 on a spindle motor 120 attached to the first portion of frame 101. In addition, an air gap G is disposed between disk dampener 150 and disk 111, at least a portion of air gap G is disposed between extending portion 210 and disk 111, and extending portion 210 extends from edge portion 220 towards spindle motor 120. Also, extending portion 210 may be formed from at least one metal and edge portion 220 may be formed from plastic.

In addition, forming edge portion 220 may comprise molding edge portion 220 to extending portion 210 through insert injection molding. Forming edge portion 220 may further comprise inserting extending portion 210 into a mold of edge portion 220.

Alternatively, extending portion 210 and edge portion 220 may be formed separately. When extending portion 210 and edge portion 220 are formed separately, the method further comprises mechanically connecting extending portion 210 and edge portion 220 using a connection system.

A disk dampener in accordance with an embodiment of the invention is more readily attached within a HDD, has a better air dampening effect, has better stability against an external impact, is more readily assembled, and has lower fabrication costs than a conventional disk dampener. Accordingly, a disk dampener, in accordance with an embodiment of the invention, disposed in a HDD may reduce the vibrations of a disk and the HSA in the HDD, so error correction time may be reduced, speed of data processing may be increased, and reliability of the HDD may be increased. In addition, when a HDD comprises a disk dampener in accordance with an embodiment of the invention, a peak value of the PES of the HDD may be reduced relative to that of a HDD that does not comprise a disk dampener (i.e., a PES characteristic of the HDD comprising the disk dampener may be improved relative to that of a HDD that does not comprise a disk dampener).

Although embodiments of the invention have been described herein, various changes may be made to the embodiment by one skilled in the art without departing from the scope of the invention as defined by the accompanying claims.

## Claims

1. A disk dampener (150) disposed adjacent to a surface of a disk (110, 111, 112) in a hard disk drive (HDD), wherein an air gap is disposed between the disk dampener (150) and the surface of the disk (110, 111, 112), the disk dampener (150) comprising:
an edge portion (220) having a shape corresponding to an outer edge of the disk (110, 111, 112), wherein the disk dampener (150) is anchored to the HDD through the edge portion (220); and,
an extending portion (210) extending from the edge portion (220) toward an axis passing through the center of the disk (110, 111, 112),
wherein the axis is perpendicular to the surface of the disk (110, 111, 112), at least a portion of the air gap is disposed between the extending portion (210) and the disk (110, 111, 112), and the edge portion (220) and the extending portion (210) are formed from different materials.

2. The disk dampener (150) of claim 1, wherein the extending portion (210) is formed from at least one metal and the edge portion (220) is formed from plastic.

3. The disk dampener (150) of claim 2, wherein the edge portion (220) comprises:
a plurality of spacers (226), wherein each spacer (226) is longer than all non-spacer portions of the edge portion (220) along a first dimension parallel to the axis; and,
anchoring holes (228), wherein the disk dampener (150) is anchored to the HDD through the anchoring holes (228).

4. The disk dampener (150) of claim 2, wherein the extending portion (210) and the edge portion (220) are molded together.

5. The disk dampener (150) of claim 2, further comprising a connection system mechanically connecting the extending portion (210) and the edge portion (220).

6. The disk dampener (150) of claim 5, wherein the connection system comprises:
a projection (214) disposed on the extending portion (210); and,
a cavity (224) disposed in the edge portion (220),
wherein the projection (214) is adapted for insertion into the cavity (224).

7. The disk dampener (150) of claim 1, wherein the edge portion (220) further comprises an impact-absorbing portion (222), wherein the impact-absorbing portion (222) is thicker than the extending portion (210) along a first dimension parallel to the axis.

8. The disk dampener (150) of claim 1, wherein the extending portion (210) has a rectangular cross-section in a cross-section taken along a line extending between the axis and the edge portion (220).

9. A hard disk drive (HDD) comprising:
a spindle motor (120) disposed on a frame (101);
a data-storage disk (110, 111, 112) mounted on the spindle motor (120);
an actuator moving a head adapted to read and write data; and,
a disk dampener (150) according to one of the claims 1 to 8.

10. A method for fabricating a hard disk drive (HDD), the method comprising:
forming a disk dampener (150), wherein forming the disk dampener (150) comprises:
forming an extending portion (210); and,
forming an edge portion (220) having a shape corresponding to an outer edge of a disk (110, 111, 112) of the HDD,
wherein the extending portion (210) and the edge portion (220) are formed from different materials;
attaching the disk dampener (150) to a frame (101); and,
placing the disk (110, 111, 112) on a spindle motor (120) attached to the frame (101),
wherein an air gap is disposed between the disk dampener (150) and the disk (110, 111, 112), at least a portion of the air gap is disposed between the extending portion (210) and the disk (110, 111, 112), and the extending portion (210) extends from the edge portion (220) towards the spindle motor (120).

11. The method of claim 10, wherein the extending portion (210) is formed from at least one metal and the edge portion (220) is formed from plastic.

12. The method of claim 11, wherein forming the edge portion (220) comprises molding the edge portion (220) to the extending portion (210) through insert injection molding.

13. The method of claim 12, wherein forming the edge portion (220) further comprises inserting the extending portion (210) into a mold of the edge portion (220).

14. The method of claim 11, wherein:
the extending portion (210) and the edge portion (220) are formed separately; and,
the method further comprises mechanically connecting the extending portion (210) and the edge portion (220) using a connection system.
